(19) Europäisches Patentamt
European Patent Office
Office européen des brevets

(11) **EP 3 588 952 B1**

(12) **EUROPEAN PATENT SPECIFICATION**

(45) Date of publication and mention
of the grant of the patent:
**28.04.2021 Bulletin 2021/17**

(51) Int Cl.:
*H04N 19/13* [(2014.01)]     *H04N 19/593* [(2014.01)]
*H04N 19/70* [(2014.01)]     *H04N 19/122* [(2014.01)]
*H04N 19/124* [(2014.01)]     *H04N 19/176* [(2014.01)]

(21) Application number: **18770920.9**

(22) Date of filing: **31.01.2018**

(86) International application number:
**PCT/KR2018/001320**

(87) International publication number:
**WO 2018/174402 (27.09.2018 Gazette 2018/39)**

(54) **TRANSFORM METHOD IN IMAGE CODING SYSTEM AND APPARATUS FOR SAME**

TRANSFORMATIONSVERFAHREN IN EINEM BILDCODIERUNGSSYSTEM UND VORRICHTUNG DAFÜR

PROCÉDÉ DE TRANSFORMATION DANS UN SYSTÈME DE CODAGE D'IMAGE ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2017 US 201762474574 P**

(43) Date of publication of application:
**01.01.2020 Bulletin 2020/01**

(73) Proprietor: **LG Electronics Inc.**
**Seoul 07336 (KR)**

(72) Inventors:
• **KIM, Seunghwan**
**Seoul 06772 (KR)**
• **JANG, Hyeongmoon**
**Seoul 06772 (KR)**
• **LIM, Jaehyun**
**Seoul 06772 (KR)**

(74) Representative: **Maikowski & Ninnemann Patentanwälte Partnerschaft mbB**
**Postfach 15 09 20**
**10671 Berlin (DE)**

(56) References cited:
**KR-A- 20060 115 404    KR-A- 20120 046 727**
**KR-B1- 101 469 394**

• **CHEN J ET AL: "Algorithm Description of Joint Exploration Test Model 5", 5. JVET MEETING; 12-1-2017 - 20-1-2017; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-E1001-v2, 11 February 2017 (2017-02-11), XP030150648,**
• **JANG H ET AL: "Adaptive NSST Kernel Size Selection", 5. JVET MEETING; 12-1-2017 - 20-1-2017; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-E0047-v3, 13 January 2017 (2017-01-13), XP030150519,**
• **JIANLE CHEN: "Algorithm Description of Joint Exploration Test Model 1", Joint Video Exploration Team (JVET) of ITU-T SG 16 WP 3 and ISO/IEC JTC 1/ SC 29/WG 11, JVET-A1001, 1st Meeting, October 2015 (2015-10), pages 19-21, XP055600077, Geneva, CH**
• **X. ZHAO: "TU-level non-separable secondary transform", Joint Video Exploration Team (JVET) of ITU-T SG 16 WP 3 and ISO/IEC JTC 1/ SC 29/WG 11, JVET-B0059, 2nd Meeting, 20 February 2016 (2016-02-20), XP030150066, San Diego, USA**

**Description**

**BACKGROUND**

Technical Field

The present embodiment relates to an image coding technology and, more particularly, to in an image coding system a transform method and apparatus.

Related Art

Demands for high-resolution and high-quality images, such as HD (High Definition) images and UHD (Ultra High Definition) images, are increasing in various fields. As image data has high resolution and high quality, the amount of information or bits to be transmitted increases relative to legacy image data. Therefore, when image data is transmitted using a medium, such as a conventional wired/wireless broadband line, or image data is stored using an existing storage medium, a transmission cost and a storage cost thereof are increased. Algorithms relating to video compression are, for example, described in CHEN J ET AL: "Algorithm Description of Joint Exploration Test Model 5", 5. JVET MEETING; 12-1-2017-20-1-2017; GENEVA; (THE JOINT VIDEO EXPLORATION TEAM OF ISO/IEC JTC1/SC29/WG11 AND ITU-T SG.16); URL: HTTP://PHENIX.INT-EVRY.FR/JVET/, no. JVET-EI001-v2, 11. February 2017 (2017-02-1). In publication Hyeongmun, J. et Al, "Adaptive NSST kernel Size Selection" from 13.1.2017, a flag is disclosed indicating whether a 4x4 kernel or a 8x8 kernel is used for a non-separable secondary transform applied to a block to be coded with size equal or greater than 8x8.
Accordingly, there is a need for a highly efficient image compression technique for effectively transmitting, storing, and reproducing information of high resolution and high quality images.

**SUMMARY**

The subject-matter of the claims is presented. The present example provides a method and apparatus for enhancing image coding efficiency.
The present example also provides a method and apparatus for enhancing transform efficiency.
The present example also provides a method and apparatus for enhancing efficiency of residual coding based on a multi-transform.
The present example also provides a non-separable secondary transform method and apparatus.
In an example, there is provided a transform method performed by a decoding apparatus. The method includes obtaining transform coefficients for a target block, determining a non-separable secondary transform (NSST) set for the target block, selecting one of a plurality of NSST kernels included in the NSST set based on an NSST index, and generating modified transform coefficients by non-separable-secondary-transforming the transform coefficients based on the selected NSST kernel. The NSST set for the target block is determined based on at least one of an intra prediction mode and a size of the target block.
According to another example of the present embodiment, there is provided a decoding apparatus performing a transform. The decoding apparatus includes a dequantization unit configured to obtain transform coefficients for a target block by performing dequantization on quantized transform coefficients of the target block, and an inverse transformer configured to determine a non-separable secondary transform (NSST) set for the target block, select one of a plurality of NSST kernels included in the NSST set based on an NSST index, and generate modified transform coefficients by non-separable-secondary-transforming the transform coefficients based on the selected NSST kernel. The inverse transformer determines the NSST set for the target block based on at least one of an intra prediction mode and a size of the target block.
According to yet another example there is provided a transform method performed by an encoding apparatus. The method includes obtaining transform coefficients for a target block, determining a non-separable secondary transform (NSST) set for the target block, selecting one of a plurality of NSST kernels included in the NSST set, setting an NSST index, and generating modified transform coefficients by non-separable-secondary-transforming the transform coefficients based on the selected NSST kernel. The NSST set for the target block is determined based on at least one of an intra prediction mode and the size of the target block.
According to yet another example, there is provided an encoding apparatus performing a transform. The encoding apparatus includes a transformer configured to obtain transform coefficients for a target block by performing a primary transform on the residual samples of the target block, determine a non-separable secondary transform (NSST) set for the target block, select one of a plurality of NSST kernels included in the NSST set based on an NSST index, and generate modified transform coefficients by non-separable-secondary-transforming the transform coefficients based on the selected NSST kernel. The transformer determines the NSST set for the target block based on at least one of an intra prediction mode and the size of the target block.

According to the present example, overall image/video compression efficiency can be enhanced.

According to the present example, the amount of data necessary for residual processing can be reduced and residual coding efficiency can be enhanced through an efficient transform.

According to the present examplet, transform coefficients not 0 can be concentrated on a low frequency component through a secondary transform in a frequency domain.

According to the present example, transform efficiency can be enhanced by applying a transform kernel variably/adaptively in performing a non-separable secondary transform.

## BRIEF DESCRIPTION OF THE DRAWINGS

FIG. 1 is a schematic diagram illustrating a configuration of a video encoding device to which the present embodiment is applicable.

FIG. 2 is a schematic diagram illustrating a configuration of a video decoding device to which the present embodiment is applicable.

FIG. 3 schematically illustrates a multi-transform scheme according to the present embodiment.

FIG. 4 illustrates 65 intra direction modes of a prediction mode.

FIG. 5 illustrates a method of determining an NSST set based on an intra prediction mode and a block size.

FIG. 6 schematically illustrates an example of a video/image encoding method including a transform method according to the present embodiment.

FIG. 7 schematically illustrates an example of a video/image decoding method including a transform method according to the present embodiment.

## DESCRIPTION OF EXEMPLARY EMBODIMENTS

The present embodiment may be modified in various forms, and specific examples thereof will be described and illustrated in the drawings. However, the examples are not intended for limiting the embodiment. The terms used in the following description are used to merely describe specific examples, but are not intended to limit the embodiment. An expression of a singular number includes an expression of the plural number, so long as it is clearly read differently. The terms such as "include" and "have" are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Meanwhile, elements in the drawings described in the embodiment are independently drawn for the purpose of convenience for explanation of different specific functions, and do not mean that the elements are embodied by independent hardware or independent software. For example, two or more elements of the elements may be combined to form a single element, or one element may be divided into plural elements. The embodiments in which the elements are combined and/or divided belong to the embodiment without departing from the concept of the embodiment.

Hereinafter, examples of the present embodiment will be described in detail with reference to the accompanying drawings. In addition, like reference numerals are used to indicate like elements throughout the drawings, and the same descriptions on the like elements will be omitted.

In the present specification, generally a picture means a unit representing an image at a specific time, a slice is a unit constituting a part of the picture. One picture may be composed of plural slices, and the terms of a picture and a slice may be mixed with each other as occasion demands.

A pixel or a pel may mean a minimum unit constituting one picture (or image). Further, a "sample" may be used as a term corresponding to a pixel. The sample may generally represent a pixel or a value of a pixel, may represent only a pixel (a pixel value) of a luma component, and may represent only a pixel (a pixel value) of a chroma component.

A unit indicates a basic unit of image processing. The unit may include at least one of a specific area and information related to the area. Optionally, the unit may be mixed with terms such as a block, an area, or the like. In a typical case, an M×N block may represent a set of samples or transform coefficients arranged in M columns and N rows.

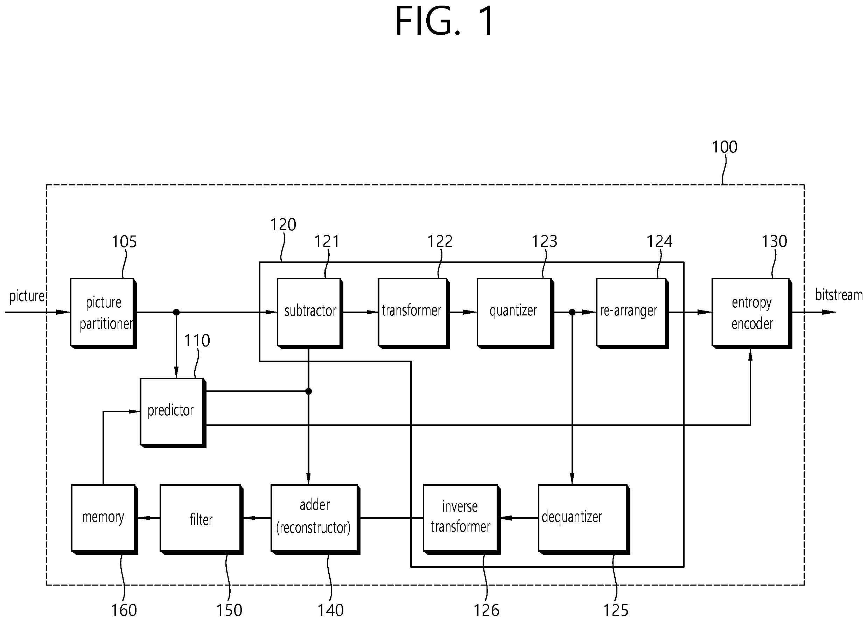

FIG. 1 briefly illustrates a structure of a video encoding apparatus to which the present embodiment is applicable.

Referring to FIG. 1, a video encoding apparatus 100 may include a picture partitioner 105, a predictor 110, a residual processer 120, an entropy encoder 130, an adder 140, a filter 150, and a memory 160. The residual processer 120 may include a subtractor 121, a transformer 122, a quantizer 123, a re-arranger 124, a dequantizer 125, an inverse transformer 126.

The picture partitioner 105 may split an input picture into at least one processing unit.

In an example, the processing unit may be referred to as a coding unit (CU). In this case, the coding unit may be recursively split from the largest coding unit (LCU) according to a quad-tree binary-tree (QTBT) structure. For example, one coding unit may be split into a plurality of coding units of a deeper depth based on a quadtree structure and/or a binary tree structure. In this case, for example, the quad tree structure may be first applied and the binary tree structure may be applied later. Alternatively, the binary tree structure may be applied first. The coding procedure according to the present embodiment may be performed based on a final coding unit which is not split any further. In this case, the largest coding unit may be used as the final coding unit based on coding efficiency, or the like, depending on image characteristics, or the coding unit may be recursively split into coding units of a lower depth as necessary and a coding unit having an optimal size may be used as the final coding unit. Here, the coding procedure may include a procedure such as prediction, transformation, and reconstruction, which will be described later.

In another example, the processing unit may include a coding unit (CU) prediction unit (PU), or a transform unit (TU). The coding unit may be split from the largest coding unit (LCU) into coding units of a deeper depth according to the quad tree structure. In this case, the largest coding unit may be directly used as the final coding unit based on the coding efficiency, or the like, depending on the image characteristics, or the coding unit may be recursively split into coding units of a deeper depth as necessary and a coding unit having an optimal size may be used as a final coding unit. When the smallest coding unit (SCU) is set, the coding unit may not be split into coding units smaller than the smallest coding unit. Here, the final coding unit refers to a coding unit which is partitioned or split to a prediction unit or a transform unit. The prediction unit is a unit which is partitioned from a coding unit, and may be a unit of sample prediction. Here, the prediction unit may be divided into sub-blocks. The transform unit may be divided from the coding unit according to the quad-tree structure and may be a unit for deriving a transform coefficient and/or a unit for deriving a residual signal from the transform coefficient. Hereinafter, the coding unit may be referred to as a coding block (CB), the prediction unit may be referred to as a prediction block (PB), and the transform unit may be referred to as a transform block (TB). The prediction block or prediction unit may refer to a specific area in the form of a block in a picture and include an array of prediction samples. Also, the transform block or transform unit may refer to a specific area in the form of a block in a picture and include the transform coefficient or an array of residual samples.

The predictor 110 may perform prediction on a processing target block (hereinafter, a current block), and may generate a predicted block including prediction samples for the current block. A unit of prediction performed in the predictor 110 may be a coding block, or may be a transform block, or may be a prediction block.

The predictor 110 may determine whether intra-prediction is applied or inter-prediction is applied to the current block. For example, the predictor 110 may determine whether the intra-prediction or the inter-prediction is applied in unit of CU.

In case of the intra-prediction, the predictor 110 may derive a prediction sample for the current block based on a reference sample outside the current block in a picture to which the current block belongs (hereinafter, a current picture). In this case, the predictor 110 may derive the prediction sample based on an average or interpolation of neighboring reference samples of the current block (case (i)), or may derive the prediction sample based on a reference sample existing in a specific (prediction) direction as to a prediction sample among the neighboring reference samples of the current block (case (ii)). The case (i) may be called a non-directional mode or a non-angular mode, and the case (ii) may be called a directional mode or an angular mode. In the intra-prediction, prediction modes may include as an example 33 directional modes and at least two non-directional modes. The non-directional modes may include DC mode and planar mode. The predictor 110 may determine the prediction mode to be applied to the current block by using the prediction mode applied to the neighboring block.

In case of the inter-prediction, the predictor 110 may derive the prediction sample for the current block based on a sample specified by a motion vector on a reference picture. The predictor 110 may derive the prediction sample for the current block by applying any one of a skip mode, a merge mode, and a motion vector prediction (MVP) mode. In case of the skip mode and the merge mode, the predictor 110 may use motion information of the neighboring block as motion information of the current block. In case of the skip mode, unlike in the merge mode, a difference (residual) between the prediction sample and an original sample is not transmitted. In case of the MVP mode, a motion vector of the neighboring block is used as a motion vector predictor and thus is used as a motion vector predictor of the current block to derive a motion vector of the current block.

In case of the inter-prediction, the neighboring block may include a spatial neighboring block existing in the current picture and a temporal neighboring block existing in the reference picture. The reference picture including the temporal neighboring block may also be called a collocated picture (colPic). Motion information may include the motion vector and a reference picture index. Information such as prediction mode information and motion information may be (entropy) encoded, and then output as a form of a bit stream.

When motion information of a temporal neighboring block is used in the skip mode and the merge mode, a highest picture in a reference picture list may be used as a reference picture. Reference pictures included in the reference picture list may be aligned based on a picture order count (POC) difference between a current picture and a corresponding reference picture. A POC corresponds to a display order and may be discriminated from a coding order.

The subtractor 121 generates a residual sample which is a difference between an original sample and a prediction sample. If the skip mode is applied, the residual sample may not be generated as described above.

The transformer 122 transforms residual samples in units of a transform block to generate a transform coefficient. The transformer 122 may perform transformation based on the size of a corresponding transform block and a prediction mode applied to a coding block or prediction block spatially overlapping with the transform block. For example, residual samples may be transformed using discrete sine transform (DST) transform kernel if intra-prediction is applied to the coding block or the prediction block overlapping with the transform block and the transform block is a $4 \times 4$ residual array and is transformed using discrete cosine transform (DCT) transform kernel in other cases.

The quantizer 123 may quantize the transform coefficients to generate quantized transform coefficients.

The re-arranger 124 rearranges quantized transform coefficients. The re-arranger 124 may rearrange the quantized transform coefficients in the form of a block into a one-dimensional vector through a coefficient scanning method. Although the re-arranger 124 is described as a separate component, the re-arranger 124 may be a part of the quantizer 123.

The entropy encoder 130 may perform entropy-encoding on the quantized transform coefficients. The entropy encoding may include an encoding method, for example, an exponential Golomb, a context-adaptive variable length coding (CAVLC), a context-adaptive binary arithmetic coding (CABAC), or the like. The entropy encoder 130 may perform entropy encoding or predetermined-method encoding together or separately on information (e.g., a syntax element value or the like) required for video reconstruction in addition to the quantized transform coefficients. The entropy-encoded information may be transmitted or stored in unit of a network abstraction layer (NAL) in a bit stream form.

The dequantizer 125 dequantizes values (transform coefficients) quantized by the quantizer 123 and the inverse transformer 126 inversely transforms values dequantized by the dequantizer 125 to generate a residual sample.

The adder 140 adds a residual sample to a prediction sample to reconstruct a picture. The residual sample may be added to the prediction sample in units of a block to generate a reconstructed block. Although the adder 140 is described as a separate component, the adder 140 may be a part of the predictor 110. Meanwhile, the adder 140 may be referred to as a reconstructor or reconstructed block generator.

The filter 150 may apply deblocking filtering and/or a sample adaptive offset to the reconstructed picture. Artifacts at a block boundary in the reconstructed picture or distortion in quantization may be corrected through deblocking filtering and/or sample adaptive offset. Sample adaptive offset may be applied in units of a sample after deblocking filtering is completed. The filter 150 may apply an adaptive loop filter (ALF) to the reconstructed picture. The ALF may be applied to the reconstructed picture to which deblocking filtering and/or sample adaptive offset has been applied.

The memory 160 may store a reconstructed picture (decoded picture) or information necessary for encoding/decoding. Here, the reconstructed picture may be the reconstructed picture filtered by the filter 150. The stored reconstructed picture may be used as a reference picture for (inter) prediction of other pictures. For example, the memory 160 may store (reference) pictures used for inter-prediction. Here, pictures used for inter-prediction may be designated according to a reference picture set or a reference picture list.

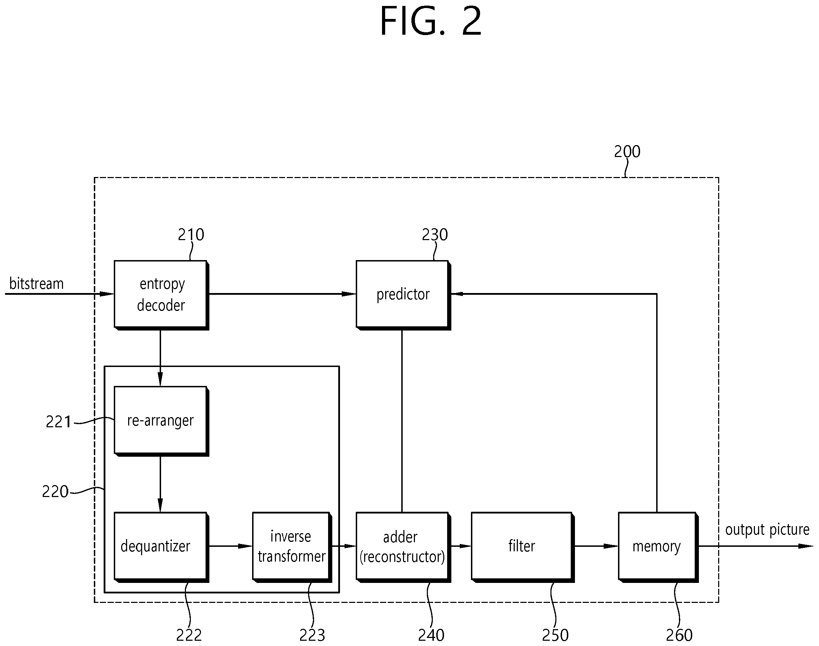

FIG. 2 briefly illustrates a structure of a video decoding device to which the present embodiment is applicable.

Referring to FIG. 2, a video decoding apparatus 200 may include an entropy decoder 210, a residual processer 220, a predictor 230, an adder 240, a filter 250, and a memory 260. The residual processer 220 may include a re-arranger 221, a dequantizer 222, an inverse transformer 223. Although not illustrated in the drawings, the video decoding apparatus 200 may include a receiving unit for receiving a bit stream including video information. The receiving unit may be configured as a separate module or may be included in the entropy decoder 210.

When a bit stream including video information is input, the video decoding apparatus 200 may reconstruct a video in association with a process by which video information is processed in the video encoding apparatus.

For example, the video decoding apparatus 200 may perform video decoding using a processing unit applied in the video encoding apparatus. Thus, the processing unit block of video decoding may be, for example, a coding unit and, in another example, a coding unit, a prediction unit or a transform unit. The coding unit may be split from the largest coding unit according to the quad tree structure and/or the binary tree structure.

A prediction unit and a transform unit may be further used in some cases, and in this case, the prediction block is a block derived or partitioned from the coding unit and may be a unit of sample prediction. Here, the prediction unit may be divided into sub-blocks. The transform unit may be split from the coding unit according to the quad tree structure and may be a unit that derives a transform coefficient or a unit that derives a residual signal from the transform coefficient.

The entropy decoder 210 may parse the bit stream to output information required for video reconstruction or picture reconstruction. For example, the entropy decoder 210 may decode information in the bit stream based on a coding method such as exponential Golomb encoding, CAVLC, CABAC, or the like, and may output a value of a syntax element required for video reconstruction and a quantized value of a transform coefficient regarding a residual.

More specifically, a CABAC entropy decoding method may receive a bin corresponding to each syntax element in a bit stream, determine a context model using decoding target syntax element information and decoding information of neighboring and decoding target blocks or information of symbol/bin decoded in a previous step, predict bin generation probability according to the determined context model and perform arithmetic decoding of the bin to generate a symbol corresponding to each syntax element value. Here, the CABAC entropy decoding method may update the context model using information of a symbol/bin decoded for a context model of the next symbol/bin after determination of the context model.

Information about prediction among information decoded in the entropy decoder 210 may be provided to the predictor 250 and residual values, that is, quantized transform coefficients, on which entropy decoding has been performed by the entropy decoder 210 may be input to the re-arranger 221.

The re-arranger 221 may rearrange the quantized transform coefficients into a two-dimensional block form. The re-arranger 221 may perform rearrangement corresponding to coefficient scanning performed by the encoding device. Although the re-arranger 221 is described as a separate component, the re-arranger 221 may be a part of the dequantizer 222.

The dequantizer 222 may de-quantize the quantized transform coefficients based on a (de)quantization parameter to output a transform coefficient. In this case, information for deriving a quantization parameter may be signaled from the encoding device.

The inverse transformer 223 may inverse-transform the transform coefficients to derive residual samples.

The predictor 230 may perform prediction on a current block, and may generate a predicted block including prediction samples for the current block. A unit of prediction performed in the predictor 230 may be a coding block or may be a transform block or may be a prediction block.

The predictor 230 may determine whether to apply intra-prediction or inter-prediction based on information on a prediction. In this case, a unit for determining which one will be used between the intra-prediction and the inter-prediction may be different from a unit for generating a prediction sample. In addition, a unit for generating the prediction sample may also be different in the inter-prediction and the intra-prediction. For example, which one will be applied between the inter-prediction and the intra-prediction may be determined in unit of CU. Further, for example, in the inter-prediction, the prediction sample may be generated by determining the prediction mode in unit of PU, and in the intra-prediction, the prediction sample may be generated in unit of TU by determining the prediction mode in unit of PU.

In case of the intra-prediction, the predictor 230 may derive a prediction sample for a current block based on a neighboring reference sample in a current picture. The predictor 230 may derive the prediction sample for the current block by applying a directional mode or a non-directional mode based on the neighboring reference sample of the current block. In this case, a prediction mode to be applied to the current block may be determined by using an intra-prediction mode of a neighboring block.

In the case of inter-prediction, the predictor 230 may derive a prediction sample for a current block based on a sample specified in a reference picture according to a motion vector. The predictor 230 may derive the prediction sample for the current block using one of the skip mode, the merge mode and the MVP mode. Here, motion information required for inter-prediction of the current block provided by the video encoding apparatus, for example, a motion vector and information about a reference picture index may be acquired or derived based on the information about prediction.

In the skip mode and the merge mode, motion information of a neighboring block may be used as motion information of the current block. Here, the neighboring block may include a spatial neighboring block and a temporal neighboring block.

The predictor 230 may construct a merge candidate list using motion information of available neighboring blocks and use information indicated by a merge index on the merge candidate list as a motion vector of the current block. The merge index may be signaled by the encoding device. Motion information may include a motion vector and a reference picture. When motion information of a temporal neighboring block is used in the skip mode and the merge mode, a highest picture in a reference picture list may be used as a reference picture.

In the case of the skip mode, a difference (residual) between a prediction sample and an original sample is not transmitted, distinguished from the merge mode.

In the case of the MVP mode, the motion vector of the current block may be derived using a motion vector of a neighboring block as a motion vector predictor. Here, the neighboring block may include a spatial neighboring block and a temporal neighboring block.

When the merge mode is applied, for example, a merge candidate list may be generated using a motion vector of a reconstructed spatial neighboring block and/or a motion vector corresponding to a Col block which is a temporal neighboring block. A motion vector of a candidate block selected from the merge candidate list is used as the motion vector of the current block in the merge mode. The aforementioned information about prediction may include a merge index indicating a candidate block having the best motion vector selected from candidate blocks included in the merge candidate list. Here, the predictor 230 may derive the motion vector of the current block using the merge index.

When the MVP (Motion vector Prediction) mode is applied as another example, a motion vector predictor candidate list may be generated using a motion vector of a reconstructed spatial neighboring block and/or a motion vector corresponding to a Col block which is a temporal neighboring block. That is, the motion vector of the reconstructed spatial neighboring block and/or the motion vector corresponding to the Col block which is the temporal neighboring block may be used as motion vector candidates. The aforementioned information about prediction may include a prediction motion vector index indicating the best motion vector selected from motion vector candidates included in the list. Here, the predictor 230 may select a prediction motion vector of the current block from the motion vector candidates included in the motion vector candidate list using the motion vector index. The predictor of the encoding device may obtain a motion vector difference (MVD) between the motion vector of the current block and a motion vector predictor, encode the MVD and output the encoded MVD in the form of a bit stream. That is, the MVD may be obtained by subtracting the motion vector predictor from the motion vector of the current block. Here, the predictor 230 may acquire a motion vector included in the information about prediction and derive the motion vector of the current block by adding the motion vector difference to the motion vector predictor. In addition, the predictor may obtain or derive a reference picture index indicating a reference picture from the aforementioned information about prediction.

The adder 240 may add a residual sample to a prediction sample to reconstruct a current block or a current picture. The adder 240 may reconstruct the current picture by adding the residual sample to the prediction sample in units of a block. When the skip mode is applied, a residual is not transmitted and thus the prediction sample may become a reconstructed sample. Although the adder 240 is described as a separate component, the adder 240 may be a part of the predictor 230. Meanwhile, the adder 240 may be referred to as a reconstructor reconstructed block generator.

The filter 250 may apply deblocking filtering, sample adaptive offset and/or ALF to the reconstructed picture. Here, sample adaptive offset may be applied in units of a sample after deblocking filtering. The ALF may be applied after deblocking filtering and/or application of sample adaptive offset.

The memory 260 may store a reconstructed picture (decoded picture) or information necessary for decoding. Here, the reconstructed picture may be the reconstructed picture filtered by the filter 250. For example, the memory 260 may store pictures used for inter-prediction. Here, the pictures used for inter-prediction may be designated according to a reference picture set or a reference picture list. A reconstructed picture may be used as a reference picture for other pictures. The memory 260 may output reconstructed pictures in an output order.

Meanwhile, as described above, in performing video coding, a prediction is performed to enhance compression efficiency. Accordingly, a predicted block including prediction samples for a current block, that is, a coding target block, may be generated. In this case, the predicted block includes prediction samples in a spatial domain (or pixel domain). The predicted block is identically derived in the encoding apparatus and the decoding apparatus. The encoding apparatus can improve image coding efficiency by signaling residual information on a residual between an original block and the predicted block not an original sample value of the original block itself to the decoding apparatus. The decoding apparatus may derive a residual block including residual samples based on the residual information, may generate a reconstruction block including reconstruction samples by adding up the residual block and the predicted block, and may generate a reconstruction picture including the reconstruction blocks.

The residual information may be generated through a transform and quantization procedure. For example, the encoding apparatus may derive the residual block between the original block and the predicted block, may derive transform coefficients by performing a transform procedure on the residual samples (residual sample array) included in the residual block, may derive quantized transform coefficients by performing a quantization procedure on the transform coefficients, and may signal related residual information to the decoding apparatus (through a bit stream). In this case, the residual information may include information, such as value information, location information, a transform scheme, a transform kernel, and a quantization parameter of the quantized transform coefficients. The decoding apparatus may perform a dequantization/inverse transform procedure based on the residual information, and may derive the residual samples (or residual block). The decoding apparatus may generate the reconstruction picture based on the predicted block and the residual block. The encoding apparatus may also derive the residual block by performing a dequantization/inverse transform on the quantized transform coefficients for the reference of inter prediction of a subsequent picture, and may generate the reconstruction picture based on the residual block.

Meanwhile, a multi-transform scheme may be applied in performing the above-described transform.

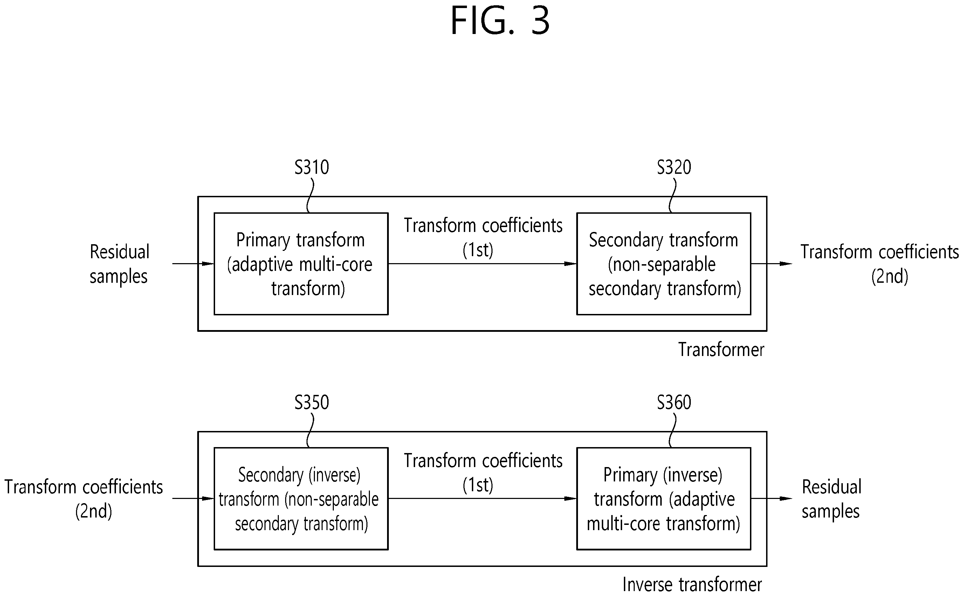

FIG. 3 schematically illustrates a multi-transform scheme.

Referring to FIG. 3, the transformer may correspond to the transformer of the encoding apparatus of FIG. 1. The inverse transformer may correspond to the inverse transformer of the encoding apparatus of FIG. 1 or the inverse transformer of the decoding apparatus of FIG. 2.

The transformer may derive (primary) transform coefficients by performing a primary transform based on residual samples (residual sample array) within a residual block (S310). In this case, the primary transform may include an adaptive multi-core transform.

the adaptive multi-core transform may indicate a method of performing a transform additionally using a discrete cosine transform (DCT) Type 2, a discrete sine transform (DST) Type 7, a DCT Type 8 and/or a DST Type 1. That is, the multi-core transform may indicate a transform method of transforming a residual signal (or residual block) of a spatial domain into transform coefficients (or primary transform coefficients) of a frequency domain based on a plurality of transform kernels selected among the DCT Type 2, the DST Type 7, the DCT Type 8 and the DST Type 1. In this case, the primary transform coefficients may be called temporary transform coefficients from the viewpoint of the transformer.

In other words, if the existing transform method is applied, transform coefficients may be generated by applying a transform from a spatial domain for a residual signal (or residual block) to a frequency domain based on the DCT Type 2. In contrast, if the adaptive multi-core transform is applied, transform coefficients (or primary transform coefficients) may be generated by applying a transform from a spatial domain for a residual signal (or residual block) to a frequency domain based on the DCT Type 2, the DST Type 7, the DCT Type 8 and/or the DST Type 1. In this case, the DCT Type 2, the DST Type 7, the DCT Type 8 and the DST Type 1 may be called a transform type, a transform kernel or a transform core.

For reference, the DCT/DST transform types may be defined based on base functions. The base functions may be represented as follows.

[Table 1]

| Transform Type | Basis function $T_i(j)$, $i, j=0, 1,..., N-1$ |
|---|---|
| DCT-II | $T_i(j) = \omega_0 \cdot \sqrt{\dfrac{2}{N}} \cdot \cos\left(\dfrac{\pi \cdot i \cdot (2j+1)}{2N}\right)$ where $\omega_0 = \begin{cases} \sqrt{\dfrac{2}{N}} & i = 0 \\ 1 & i \neq 0 \end{cases}$ |
| DCT-V | $T_i(j) = \omega_0 \cdot \omega_1 \cdot \sqrt{\dfrac{2}{2N-1}} \cdot \cos\left(\dfrac{2\pi \cdot i \cdot j}{2N-1}\right)$, where $\omega_0 = \begin{cases} \sqrt{\dfrac{2}{N}} & i = 0 \\ 1 & i \neq 0 \end{cases}$, $\omega_1 = \begin{cases} \sqrt{\dfrac{2}{N}} & j = 0 \\ 1 & j \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j+1)}{4N+2}\right)$ |
| DST-I | $T_i(j) = \sqrt{\dfrac{2}{N+1}} \cdot \sin\left(\dfrac{\pi \cdot (i+1) \cdot (j+1)}{N+1}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |

If the adaptive multi-core transform is performed, a vertical transform kernel and horizontal transform kernel for a target block may be selected among transform kernels. A vertical transform for a target block may be performed based on the vertical transform kernel. A horizontal transform for the target block may be performed based on the horizontal transform kernel. In this case, the horizontal transform may indicate a transform for the horizontal components of the target block. The vertical transform may indicate a transform for the vertical components of the target block. The vertical transform kernel/horizontal transform kernel may be adaptively determined based on a prediction mode of the target block (CU or subblock) encompassing a residual block and/or a transform index indicative of a transform subset.

The transformer may derive (secondary) transform coefficients by performing a secondary transform based on the (primary) transform coefficients (S320). If the primary transform was a transform from the spatial domain to the frequency domain, the secondary transform may be considered to be a transform from the frequency domain to the frequency domain. The secondary transform may include a non-separable transform. In this case, the secondary transform may be called a non-separable secondary transform (NSST). The non-separable secondary transform may indicate a transform for generating transform coefficients (or secondary transform coefficients) for a residual signal by performing a secondary transform on the (primary) transform coefficients, derived through the primary transform, based on a non-separable transform matrix. In this case, the vertical transform and the horizontal transform are separated (or horizontal and vertical transform independently) and are not applied, but the transforms may be applied to the (primary) transform coefficients at once based on the non-separable transform matrix. In other words, the non-separable secondary transform may indicate a transform method of generating transform coefficients (or secondary transform coefficients) by performing transforms without separating the vertical components and horizontal components of the (primary) transform coefficients based on the non-separable transform matrix. The non-separable secondary transform may be applied to the top-left region of a block (may be hereinafter called a transform coefficient block) configured with the (primary) transform coefficients. For example, if each of the width (W) and height (H) of the transform coefficient block is 8 or more, an $8 \times 8$ non-separable secondary transform may be applied to the top-left $8 \times 8$ region of the transform coefficient block. Furthermore, if each of the width (W) or height (H) of the transform coefficient block is smaller than 8, a $4 \times 4$ non-separable secondary transform may be applied to the top-left min $(8,W) \times$ min $(8,H)$ region of the transform coefficient block.

Specifically, for example, if a $4 \times 4$ input block is used, a non-separable secondary transform may be performed as follows.

The $4 \times 4$ input block X may be represented as follows.

【Equation 1】

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

If the X is indicated in a vector form, a vector $\vec{X}$ may be represented as follows.

【Equation 2】

$$\vec{X} = [X_{00} \quad X_{01} \quad X_{02} \quad X_{03} \quad X_{10} \quad X_{11} \quad X_{12} \quad X_{13} \quad X_{20} \quad X_{21} \quad X_{22} \quad X_{23} \quad X_{30} \quad X_{31} \quad X_{32} \quad X_{33}]^{T}$$

In this case, the secondary non-separable transform may be calculated as follows.

【Equation 3】

$$\vec{F} = T \cdot \vec{X}$$

In this case, F indicates a transform coefficient vector, and T indicates a $16 \times 16$ (non-separable) transform matrix

A $16 \times 1$ transform coefficient vector F may be derived through Equation 3. The F may be re-organized into a $4 \times 4$ block through a scan order (horizontal, vertical, diagonal). However, in the above calculation, for example, a Hypercube-Givens Transsform (HyGT) may be used for the calculation of a non-separable secondary transform in order to reduce the computation load of a non-separable secondary transform.

Meanwhile, in the non-separable secondary transform, a transform kernel (or transform core or transform type) may be selected based on a mode (mode dependent). In this case, the mode may include an intra prediction mode and/or an inter prediction mode.

As described above, the non-separable secondary transform may be performed based on an $8 \times 8$ transform or $4 \times 4$ transform determined based on the width (W) and height (H) of the transform coefficient block. That is, the non-separable secondary transform may be performed based on an $8 \times 8$ subblock size or a $4 \times 4$ subblock size. For example, in order to select a mode-based transform kernel, 35 sets of non-separable secondary transform kernels, each set having three kernels, for a non-separable secondary transform may be configured for both the $8 \times 8$ subblock size and the $4 \times 4$ subblock size. That is, 35 transform sets may be configured for the $8 \times 8$ subblock size, and 35 transform sets may be configured for the $4 \times 4$ subblock size. In this case, three $8 \times 8$ transform kernels may be included in each of the 35 transform sets for the $8 \times 8$ subblock size. In this case, three $4 \times 4$ transform kernels may be included in each of the 35 transform sets for the $4 \times 4$ subblock size. However, the transform subblock size, the number of sets, and the number of transform kernels within a set are examples, and a size other than $8 \times 8$ or $4 \times 4$ may be used or n sets may be configured, and k transform kernels may be included in each set.

The transform set may be called an NSST set. A transform kernel within the NSST set may be called an NSST kernel. The selection of a specific set of the transform sets may be performed based on the intra prediction mode of a target block (CU or subblock), for example.

For reference, for example, an intra prediction mode may include two non-directional (or non-angular) intra prediction modes and 65 directional (or angular) intra prediction modes. The non-directional intra prediction mode may include a No. 0 (planar) intra prediction mode and a No. 1 DC intra prediction mode. The directional intra prediction modes may include No. 2 to No. 66 sixty-five intra prediction modes. However, they are examples, and the present embodiment may be applied to a case where the number of intra prediction modes is different. Meanwhile, in some cases, the No. 67 intra prediction mode may be further used. The No. 67 intra prediction mode may indicate a linear model (LM) mode.

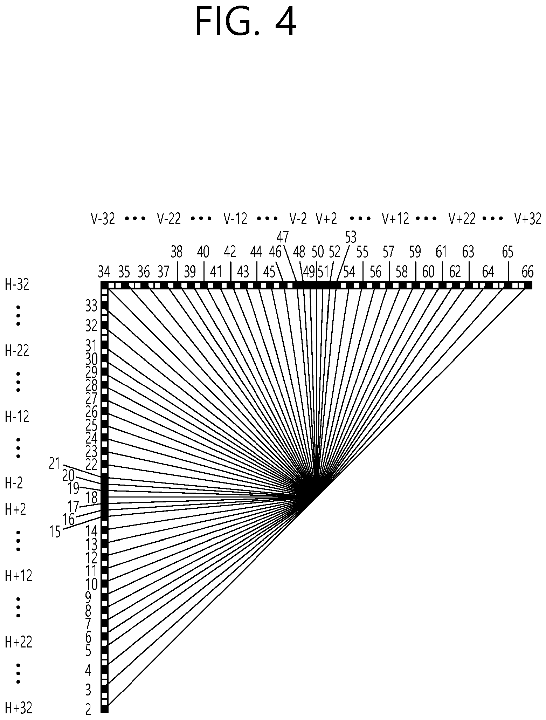

FIG. 4 illustrates 65 intra direction modes of a prediction mode.

Referring to FIG. 4, modes may be divided into intra prediction modes having horizontal directionality and intra prediction modes having vertical directionality based on a No. 34 intra prediction mode having a left-upward diagonal prediction direction. In FIG. 3, H and V mean the horizontal directionality and the vertical directionality, respectively, and numbers -32 ~ 32 indicate the displacement of a 1/32 unit on a sample grid location. No. 2 to No. 33 intra prediction modes have horizontal directionality, and No. 34 to No. 66 intra prediction modes have vertical directionality. The No. 18 intra prediction mode and the No. 50 intra prediction mode indicate a horizontal intra prediction mode and a vertical intra prediction mode, respectively. The No. 2 intra prediction mode may be called a left-downward diagonal intra prediction mode, the No. 34 intra prediction mode may be called a left-upward diagonal intra prediction mode, and the No. 66 intra prediction mode may be called a right-upward diagonal intra prediction mode.

In this case, mapping between the 35 transform sets and the intra prediction modes may be indicated as in the following table, for example. For reference, if an LM mode is applied to a target block, a secondary transform may not be applied to the target block.

【Table 2】

| intra mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| set | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |

| intra mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 (LM) |
|---|---|---|---|---|---|---|---|---|---|---|---|---|---|---|---|---|---|---|---|---|---|---|---|---|---|---|---|---|---|---|---|---|---|---|
| set | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | NULL |

Meanwhile, if a specific set is determined to be used, one of three transform kernels within the specific set may be selected based on an NSST index. The encoding apparatus may derive the NSST index indicative of a specific transform kernel based on rate-distortion (RD) check. The NSST index may be signaled to the decoding apparatus. The decoding apparatus may select one of three transform kernels within a specific set based on the NSST index. For example, an NSST index value 0 may indicate the first NSST kernel, an NSST index value 1 may indicate the second NSST kernel, and an NSST index value 2 may indicate the third NSST kernel. Alternatively, the NSST index value 0 may indicate that an NSST is not applied to a target block. The NSST index values 1 to 3 may indicate the three transform kernels.

Referring back to FIG. 3, the transformer may perform the non-separable secondary transform based on a selected transform kernel, and may obtain (secondary) transform coefficients. The (secondary) transform coefficients may be derived as quantized transform coefficients through the quantization unit as described above, may be encoded and signaled to the decoding apparatus, and may be transmitted to the dequantization/inverse transformer of the encoding apparatus.

The inverse transformer may perform a series of procedures in reverse order of the procedures performed in the transformer. The inverse transformer may receive (dequantized) (secondary) transform coefficients, may derive (primary) transform coefficients by performing a secondary transform (S350), and may obtain a residual block (residual samples) by performing a primary transform on the (primary) transform coefficients. In this case, the primary transform coefficients may be called transform coefficients modified from the viewpoint of the inverse transformer. The encoding apparatus and the decoding apparatus may generate a reconstruction block based on the residual block and the predicted block and generate a reconstruction picture based on the reconstruction block, as described above.

Meanwhile, the size of a transform kernel (NSST kernel) for a non-separable secondary transform may be fixed or may not be fixed, and the transform kernel (NSST kernel) may be configured along with transform kernels having different sizes within one set.

For example, a $4 \times 4$ NSST set includes only $4 \times 4$ NSST kernels and an $8 \times 8$ NSST set includes only $8 \times 8$ NSST kernels depending on the size of a target block (or subblock or transform coefficient block).

For another example, a mixed NSST set may be configured as follows. The mixed NSST set may include NSST kernels having different sizes. For example, the mixed NSST set may include a $4 \times 4$ NSST kernel in addition to an $8 \times 8$ NSST kernel. An NSST set including only the $8 \times 8$ NSST kernels or the $4 \times 4$ NSST kernels compared to a mixed NSST set may be called a non-mixed NSST set.

The number NSST kernels included in the mixed NSST set may be fixed or may be variable. For example, an NSST set #1 may include 3 NSST kernels, and an NSST set #2 may include 4 NSST kernels. Furthermore, the sequence of the NSST kernels included in the mixed NSST set may not be fixed and may be defined differently depending on an NSST set. For example, in the NSST set #1, NSST kernels 1, 2, and 3 may be mapped as respective NSST indices 1, 2, and 3. In the NSST set #2, NSST kernels 3, 2, and 1 may be mapped as respective NSST indices 1, 2, and 3.

Specifically, a determination of the priority of NSST kernels available within an NSST set may be based on the size (e.g., $8\times8$ NSST kernel or $4\times4$ NSST kernel) of the NSST kernels. For example, if a corresponding target block is a given size or more, an $8\times8$ NSST kernel may have higher priority than a $4\times4$ NSST kernel. In this case, an NSST index having a smaller value may be preferentially assigned to the $8\times8$ NSST kernel.

Furthermore, a determination of the priority of NSST kernels available within an NSST set may be based on the sequence (1st, 2nd, and 3rd) of the NSST kernels. For example, a $4\times4$ NSST 1st kernel may have higher priority than a $4\times4$ NSST 2nd kernel.

Specifically, for example, the mapping of NSST kernels and NSST indices within an NSST set may include embodiments disclosed in Table 3 or 4.

[Table 3]

| NSST index | 4x4 NSST Set | 8x8 NSST Set | Mixed NSST Set |
|---|---|---|---|
| 1 | 4x4 **1st** Kernel | 8x8 **1st** Kernel | 8x8 **1st** Kernel |
| 2 | 4x4 **2nd** Kernel | 8x8 2nd Kernel | 8x8 **2nd** Kernel |
| 3 | 4x4 **3rd** Kernel | 8x8 **3rd** Kernel | 4x4 **1st** Kernel |
| ... | ... | ... | ... |

[Table 4]

| NSST index | Mixed NSST Set Type1 | Mixed NSST Set Type2 | Mixed NSST Set Type3 |
|---|---|---|---|
| 1 | 8x8 **3rd** Kernel | 8x8 **1st** Kernel | 4x4 **1st** Kernel |
| 2 | 8x8 **2nd** Kernel | 8x8 **2nd** Kernel | 8x8 **1st** Kernel |
| 3 | 8x8 **1st** Kernel | 4x4 **1st** Kernel | 4x4 **2nd** Kernel |
| 4 | N.A | 4x4 **2st** Kernel | 8x8 **2nd** Kernel |
| 5 | | N.A | 4x4 **3rd** Kernel |
| ... | | | ... |

Whether a mixed NSST set is used may be indicated by various methods. For example, whether a mixed NSST set is used may be determined based on an intra prediction of a target block (or CU including a target block) and/or the size of the target block.

For example, whether a mixed NSST set is used may be determined based on an intra prediction mode of a target block. In other words, whether the mixed NSST set is used based on an intra prediction mode or whether an individual NSST set based on the subblock size is used may have been pre-determined. Accordingly, an NSST set suitable for a current target block may be determined, and a proper NSST kernel may be applied. For example, whether the mixed NSST set is used may be indicated as in the following table depending on an intra prediction mode.

【Table 5】

| Intra Mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| Mixed Type | 1 | 1 | 1 | 1 | 1 | 0 | 0 | 0 | 0 | 0 | 0 | 0 | 0 | 0 | 0 | 0 | 0 | 1 | 1 | 1 | 1 | 1 | 0 | 0 | 0 | 0 | 0 | 0 | 0 | 0 | 0 | 0 | 1 | 1 |
| Intra Mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 |
| Mixed Type | 1 | 1 | 1 | 0 | 0 | 0 | 0 | 0 | 0 | 0 | 0 | 0 | 0 | 0 | 0 | 1 | 1 | 1 | 1 | 1 | 0 | 0 | 0 | 0 | 0 | 0 | 0 | 0 | 0 | 0 | 0 | 0 | 1 | 0 |

In this case, mixed type information indicates whether the mixed NSST set is applied to the target block based on an intra prediction mode. This may be used in association with the method disclosed in Table 2. For example, the mixed type information may indicate whether a non-mixed NSST set will be mapped and used for each intra prediction mode or whether a mixed NSST set will be configured and used as described above in Table 2. Specifically, if a value of the mixed type information is 1, a mixed NSST set defined in a system instead of a non-mixed NSST set may be configured and used. In this case, the mixed NSST set defined in the system may indicate the mixed NSST set. If a value of the mixed type information is 0, the non-mixed NSST set may be used based on an intra prediction mode. The mixed type information may be called a mixed type flag indicating whether the mixed NSST set is used. According to the present embodiment, two types of NSST sets (non-mixed NSST set and mixed NSST set) may be used adaptively/variably based on a mixed type flag.

Meanwhile, two or more mixed NSST sets may be configured. In this case, mixed type information may be indicated as N (N may be greater than or equal to 2) types of various values. In this case, the mixed type information may be called a mixed type index.

For another example, whether a mixed NSST set is used may be determined by considering an intra prediction mode associated with a target block and the size of the target block at the same time. The target block may be called various names, such as a subblock, a transform block, and a transform coefficient block.

For example, mode type information may be configured instead of the mixed type information. If a value of the mode type information corresponding to an intra prediction mode is 0, a non-mixed NSST set may be set. If not (e.g., a value of the mode type information is 1), various mixed NSST sets may be determined based on the size of a corresponding target block. For example, if an intra mode is a non-directional mode (Planar or DC), a mixed NSST may be used. If an intra mode is a directional mode, a non-mixed NSST set may be used.

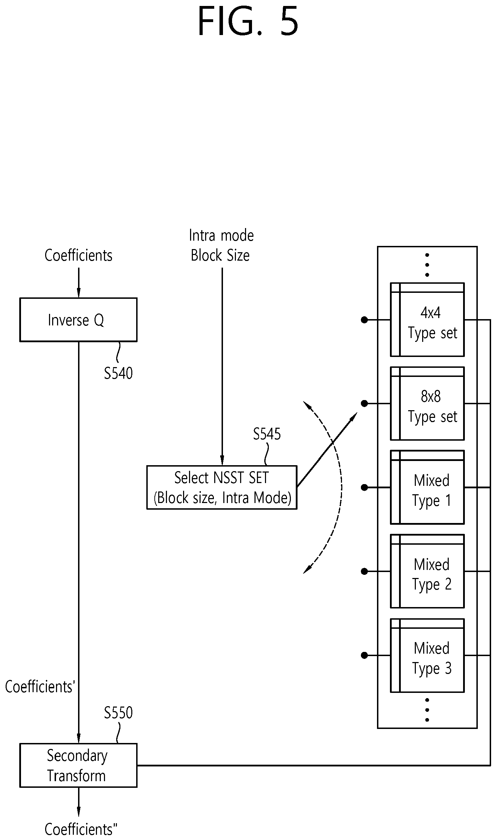

FIG. 5 illustrates a method of determining an NSST set based on an intra prediction mode and a block size.

Referring to FIG. 5, the coding apparatus (encoding apparatus and/or the decoding apparatus) derives (secondary) transform coefficients by inverse transforming (quantized) transform coefficients (S540), and derives (primary) transform coefficients by secondary-(inverse) transforming the (secondary) transform coefficients (S550). In this case, the (secondary) transform coefficients may be called temporary transform coefficients, and the (primary) transform coefficients may be called modified transform coefficients. In this case, the secondary transform may include the non-separable secondary transform. The non-separable secondary transform is performed based on an NSST kernel. The NSST kernel may be selected from an NSST set. In this case, the NSST kernel may be indicated from the NSST set based on the NSST index information.

The coding apparatus may select the NSST set among NSST set candidates based on an intra prediction mode and a block size (S545). For example, the NSST set candidates may include at least one non-mixed NSST set and at least one mixed NSST set. For example, the NSST set candidates may include at least one of an 8×8 NSST set (non-mixed NSST set 1), including only 8×8 NSST kernels, and an 4×4 NSST set (non-mixed NSST set 2) including only 4×4 NSST kernels, and may include one or more mixed NSST sets. In this case, for example, the coding apparatus may determine a specific NSST set from the NSST set candidates based on whether each of the width (W) and height (H) of a target block is 8 or more and based on a current intra prediction mode number. A specific NSST kernel may be indicated from the specific NSST set through NSST index information as described above.

Meanwhile, the NSST index may be binarized using various methods for coding efficiency. In this case, a binarization value may be efficiently set by considering a change in the statistical distribution of NSST index values that are coded and transmitted. That is, in this case, a kernel to be actually applied may be selected based on syntax indicative of a kernel size.

As described above, according to the present embodiment, the number of NSST kernels included in each transform set (NSST set) may be different. For an efficiency binarization method, variable length binarization may be performed based on a truncated unary (TU) as in the following table based on a maximum NSST index value available for each NSST set.

[Table 6]

| NSST Index | Binarization1 (maximum index:2) | Binarization2 (maximum index:3) | Binarization3 (maximum index: 4) | Binarization4 (maximum index:5) | ... |
|---|---|---|---|---|---|
| 0 | 0 | 0 | 0 | 0 | ... |
| 1 | 10 | 10 | 10 | 10 | ... |
| 2 | 11 | 110 | 110 | 110 | ... |

(continued)

| NSST Index | Binarization1 (maximum index:2) | Binarization2 (maximum index:3) | Binarization3 (maximum index: 4) | Binarization4 (maximum index:5) | ... |
|---|---|---|---|---|---|
| 3 | N.A | 111 | 1110 | 1110 | ... |
| 4 | | N.A | 1111 | 11110 | ... |
| 5 | | | N.A | 11111 | ... |
| ... | | | | N.A | ... |

In this case, the binarized values of "0" or "1" may be called bins. In this case, each of the bins may be context-based coded through CABAC/CAVLC. In this case, a context modeling value may be determined based on at least one of the size of a target block (subblock, transform block or transform coefficient block), an intra prediction mode, a value of mixed type information (mixed mode information), or a maximum NSST index value of a corresponding NSST set. In this case, the context model may be indicated based on a context index. The context index may be indicated as the sum of a context offset and a context increment.

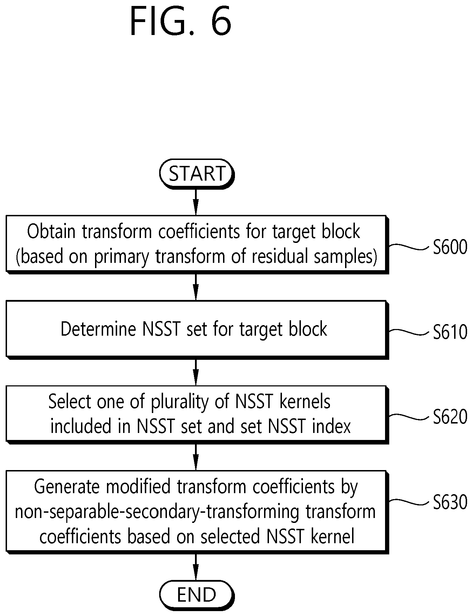

FIG. 6 schematically illustrates an example of a video/image encoding method including a transform method according to the present embodiment. The method disclosed in FIG. 6 may be performed by the encoding apparatus disclosed in FIG. 1. Specifically, for example, S600 to S630 of FIG. 6 may be performed by the transformer of the encoding apparatus.

Referring to FIG. 6, the encoding apparatus obtains transform coefficients for a target block (S600). The encoding apparatus may obtain residual samples for the target block through a comparison between an original block and a predicted block, and may obtain the transform coefficients for the target block through the primary transform of the residual samples. The primary transform includes a procedure of transforming residual samples on a spatial domain into transform coefficients on a frequency domain. In this case, the target block may include a subblock, transform block or transform coefficient block within a CU.

The encoding apparatus determines an NSST set for the target block (S610). The NSST set may include an NSST kernel used for a secondary transform. The secondary transform includes a non-separable secondary transform. The NSST set for the target block may be determined based on at least one of an intra prediction mode and the size of the target block.

The NSST set may include $8\times8$ NSST kernels or $4\times4$ NSST kernels. In this case, the NSST set may be called a non-mixed NSST set. Whether the NSST set includes $8\times8$ NSST kernels or includes $4\times4$ NSST kernels may be determined based on the size of the target block as described above.

Alternatively, the NSST set may be a mixed NSST set including a $4\times4$ NSST kernel and an $8\times8$ NSST kernel. In this case, an index value assigned to the $8\times8$ NSST kernel may be smaller than an index value assigned to the $4\times4$ NSST kernel. For example, if the size of the target block is greater than a pre-defined reference size, an index value assigned to the $8\times8$ NSST kernel may be smaller than an index value assigned to the $4\times4$ NSST kernel. Alternatively, on the contrary, an index value assigned to the $4\times4$ NSST kernel may be smaller than an index value assigned to the $8\times8$ NSST kernel.

The NSST set may include a plurality of NSST kernels. The number of NSST kernels may be set variably. For example, the number of NSST kernels included in a first NSST set may be different from the number of NSST kernels included in a second NSST set.

Meanwhile, whether a non-mixed NSST set is used or a mixed NSST set is used as the NSST set for the target block may be indicated based on mixed type information or mixed mode information.

For example, if a value of the mixed type information is 0, a non-mixed NSST set including $8\times8$ NSST kernels or $4\times4$ NSST kernels may be used. If a value of the mixed type information is not 0, a mixed NSST set including a $4\times4$ NSST kernel and an $8\times8$ NSST kernel may be used. If a plurality of mixed NSST sets is available, one of the plurality of mixed NSST sets may be indicated based on a value 1, 2, etc. of the mixed type information.

The NSST set for the target block may be determined based on both an intra prediction mode and the size of the target block. The intra prediction mode may be one of 67 (68 if an LM mode is included) intra prediction modes including an LM mode, for example. The intra prediction mode may be a prediction mode associated with the target block or may be an intra prediction mode configured in a CU spatially covering the target block or a subblock thereof.

The encoding apparatus selects one of a plurality of NSST kernels included in the NSST set and sets an NSST index (S620). The encoding apparatus may select one of the plurality of NSST kernels included in the NSST set through repetition calculation based on an RD cost. The encoding apparatus may set the NSST index as a value indicative of the selected NSST kernel.

The encoding apparatus generates modified transform coefficients by non-separable-secondary-transforming the transform coefficients based on the selected NSST kernel (S630). The encoding apparatus may encode and output the modified transform coefficients according to a determined procedure. In this case, at least one of the mixed type information, the mixed mode information and information on the NSST index may be encoded as follows. The encoding apparatus may output the encoded information in the form of a bit stream. The bit stream may be transmitted to the decoding apparatus over a network or through a storage medium.

If the information on the NSST index is encoded, a value of the NSST index may be variable-length-binarized. In this case, for example, as disclosed in Table 6, the value of the NSST index may be binarized according to a truncated unary (TU) scheme. Meanwhile, the value of the NSST index may be encoded based on context, such as CABAC or CAVLC. In this case, a context model may be determined based on at least one of the size of the target block, an intra prediction mode, a value of the mixed type information and a maximum index value within the NSST set.

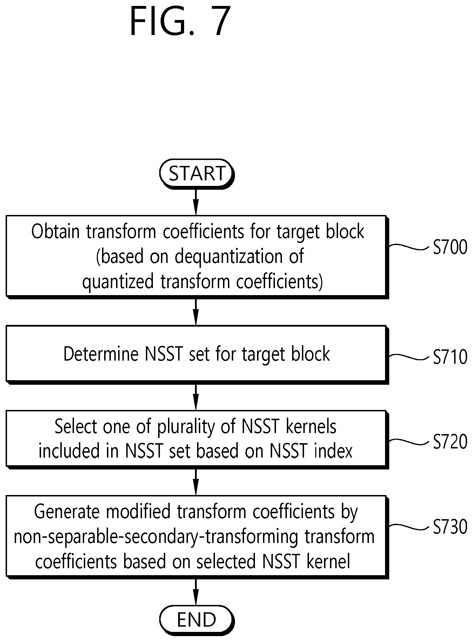

FIG. 7 schematically illustrates an example of a video/image decoding method including a transform method according to the present embodiment. The method disclosed in FIG. 7 may be performed by the decoding apparatus disclosed in FIG. 2. Specifically, for example, in FIG. 7, S700 may be performed by the dequantization unit of the decoding apparatus, and S710 to S730 may be performed by the inverse transformer of the decoding apparatus. Meanwhile, in the present embodiment, the decoding apparatus is basically described, but the method disclosed in FIG. 7 may be identically performed in the dequantization unit and inverse transformer of the encoding apparatus.

Referring to FIG. 7, the decoding apparatus obtain transform coefficients for a target block (S700). The decoding apparatus may obtain the transform coefficients by dequantizing quantized transform coefficients for the target block, obtained from information received through a bit stream. In this case, the target block may include a subblock, transform block or transform coefficient block within a CU.

The decoding apparatus determines an NSST set for the target block (S710). The NSST set may include an NSST kernel for a secondary transform. The secondary transform includes a non-separable secondary transform. The NSST set for the target block may be determined based on at least one of an intra prediction mode and the size of the target block.

The NSST set may include $8\times8$ NSST kernels or $4\times4$ NSST kernels. In this case, the NSST set may be called a non-mixed NSST set. Whether the NSST set includes $8\times8$ NSST kernels or include $4\times4$ NSST kernels may be determined based on the size of the target block as described above.

Alternatively, the NSST set may be a mixed NSST set including a $4\times4$ NSST kernel and an $8\times8$ NSST kernel. In this case, an index value assigned to the $8\times8$ NSST kernel may be smaller than an index value assigned to the $4\times4$ NSST kernel. For example, if the size of the target block is greater than a pre-defined reference size, an index value assigned to the $8\times8$ NSST kernel may be smaller than an index value assigned to the $4\times4$ NSST kernel. Alternatively, on the contrary, an index value assigned to the $4\times4$ NSST kernel may be smaller than an index value assigned to the $8\times8$ NSST kernel.

The NSST set may include a plurality of NSST kernels. The number of NSST kernels may be set variably. For example, the number of NSST kernels included in a first NSST set may be different from the number of NSST kernels included in a second NSST set.

Meanwhile, whether a non-mixed NSST set is used or a mixed NSST set is used as the NSST set for the target block may be determined based on mixed type information or mixed mode information.

For example, if a value of the mixed type information is 0, a non-mixed NSST set including $8\times8$ NSST kernels or $4\times4$ NSST kernels may be used. If a value of the mixed type information is not 0, a mixed NSST set including a $4\times4$ NSST kernel and an $8\times8$ NSST kernel may be used. If a plurality of mixed NSST sets is available, one of the plurality of mixed NSST sets may be indicated based on a value 1, 2, etc. of the mixed type information.

The NSST set for the target block may be determined based on both an intra prediction mode and the size of the target block. The intra prediction mode may be one of 67 (68 if an LM mode is included) intra prediction modes, for example. The intra prediction mode may be a prediction mode associated with the target block or may be an intra prediction mode configured in a CU spatially covering the target block or a subblock thereof.

The decoding apparatus selects one of a plurality of NSST kernels, included in the NSST set, based on an NSST index (S720). The NSST index may be obtained through a bit stream. The decoding apparatus may obtain a value of the NSST index through (entropy) decoding. The value of the NSST index may be variable-length-binarized. In this case, for example, as disclosed in Table 6, the value of the NSST index may be binarized according to a truncated unary (TU) scheme. Meanwhile, the value of the NSST index may be decoded based on context, such as CABAC or CAVLC. In this case, a context model may be determined based on at least one of the size of the target block, an intra prediction mode, a value of the mixed type information and a maximum index value within the NSST set.

The decoding apparatus generates modified transform coefficients by non-separable secondary-(inverse) transforming the transform coefficients based on the selected NSST kernel (S730). The decoding apparatus may obtain residual samples for the target block by performing a primary (inverse) transform on the modified transform coefficients.

The decoding apparatus may obtain reconstruction samples by combining prediction samples obtained based on the results of intra prediction and the residual samples, and may reconstruct a picture based on the reconstruction samples.

Thereafter, the decoding apparatus may apply an in-loop filtering procedure, such as a deblocking filtering, SAO and/or ALF procedure, to the reconstructed picture in order to enhance subjective/objective picture quality, if necessary, as described above.

The method according to the present embodiment may be implemented in a software form. The encoding apparatus and/or the decoding apparatus according to the present embodiment may be included in an apparatus for performing image processing, such as TV, a computer, a smartphone, a set-top box, or a display apparatus.

In the present embodiment, if embodiments are implemented in software, the method may be implemented as a module (process or function) that performs the above function. The module may be stored in a memory and executed by a processor. The memory may be positioned inside or outside the processor, and may be connected to the processor by various well-known means. The processor may include an application-specific integrated circuit (ASIC), other chipsets, logic circuits and/or data processors. The memory may include a read-only memory (ROM), a random access memory (RAM), a flash memory, a memory card, a storage medium and/or other storage devices.

## Claims

1. A transform method performed by a decoding apparatus, the method comprising:

   receiving a non-separable transform index;
   obtaining (700) transform coefficients for a target block;
   determining (710) a non-separable transform set for the target block;
   selecting (720) one of a plurality of non-separable transform kernels included in the non-separable transform set based on the non-separable transform index; and
   generating (730) modified transform coefficients by non-separable-transforming the transform coefficients based on the selected non-separable transform kernel,
   wherein the non-separable transform set for the target block is determined based on at least one of an intra prediction mode and a size of the target block,
   wherein a value of the non-separable transform index is represented based on a truncated unary binarization,
   **characterized in that** the non-separable transform set is a mixed non-separable transform set comprising a $4 \times 4$ non-separable transform kernel and an $8 \times 8$ non-separable transform kernel.

2. The method of claim 1, wherein an index value assigned to the $8 \times 8$ non-separable transform kernel is smaller than an index value assigned to the $4 \times 4$ non-separable transform kernel.

3. The method of claim 1, wherein if the size of the target block is greater than a pre-defined reference size, an index value assigned to the $8 \times 8$ non-separable transform kernel is smaller than an index value assigned to the $4 \times 4$ non-separable transform kernel.

4. The method of claim 1, wherein a number of the non-separable transform kernels included in the non-separable transform set is variable.

5. The method of claim 1, further comprising:

   obtaining information representing whether the mixed non-separable transform set is applied to the target block; and
   determining whether a mixed non-separable transform set is used based on the information.

6. The method of claim 5, wherein:

   if a value of the mixed type information is 0, a non-mixed non-separable transform set including $8 \times 8$ non-separable transform kernels or $4 \times 4$ non-separable transform kernels is used, and
   if a value of the mixed type information is not 0, a mixed non-separable transform set including an $4 \times 4$ non-separable transform kernel and an $8 \times 8$ non-separable transform kernel is used.

7. The method of claim 1, wherein the non-separable transform set for the target block is determined based on both the intra prediction mode and the size of the target block.

8. The method of claim 1, wherein the value of the non-separable transform index is variable-length-binarized.

9. The method of claim 1, wherein a maximum value of the non-separable transform index is 2, and wherein value 0 of the non-separable transform index is represented by bin string '0', value 1 of the non-separable transform index is represented by bin string '10', and value 2 of the non-separable transform index is represented by bin string '11'.

10. The method of claim 1, wherein:

> a value of the non-separable transform index is obtained based on context-based decoding, and
> a context model for the context-based decoding of the value of the non-separable transform index is determined based on at least one of the size of the target block, the intra prediction mode, a value of information representing whether the mixed non-separable transform set is applied to the target block and a maximum index value within the non-separable transform set.

11. A transform method performed by an encoding apparatus, the method comprising:

> obtaining (600) transform coefficients for a target block;
> determining (610) a non-separable transform set for the target block;
> selecting (620) one of a plurality of non-separable transform kernels included in the non-separable transform set, wherein the selected non-separable transform kernel is used for non-separable-transforming the transform coefficients for the target block;
> generating (630) a non-separable transform index specifying the selected non-separable transform kernel from the non-separable transform set; and
> encoding information on the non-separable transform index,
> wherein the non-separable transform set for the target block is determined based on at least one of an intra prediction mode and a size of the target block,
> wherein a value of the non-separable transform index is represented based on a truncated unary binarization, and **characterized in that** the non-separable transform set is a mixed non-separable transform set comprising a $4 \times 4$ non-separable transform kernel and an $8 \times 8$ non-separable transform kernel.

12. The method of claim 11, wherein a maximum value of the non-separable transform index is 2, and wherein value 0 of the non-separable transform index is represented by bin string '0', value 1 of the non-separable transform index is represented by bin string '10', and value 2 of the non-separable transform index is represented by bin string '11'.

13. A digital storage medium storing information causing a decoding apparatus to perform a transform method, the method comprising:

> obtaining (700) a non-separable transform index;
> obtaining (710) transform coefficients for a target block;
> determining (720) a non-separable transform set for the target block;
> selecting one of a plurality of non-separable transform kernels included in the non-separable transform set based on the non-separable transform index; and
> generating (730) modified transform coefficients by non-separable-transforming the transform coefficients based on the selected non-separable transform kernel,
> wherein the non-separable transform set for the target block is determined based on at least one of an intra prediction mode and a size of the target block,
> wherein a value of the non-separable transform is index represented based on a truncated unary binarization, and **characterized in that** the non-separable transform set is a mixed non-separable transform set comprising a $4 \times 4$ non-separable transform kernel and an $8 \times 8$ non-separable transform kernel.

14. The digital storage medium of claim 13, wherein a maximum value of the non-separable transform index is 2, and wherein value 0 of the non-separable transform index is represented by bin string '0', value 1 of the non-separable transform index is represented by bin string '10', and value 2 of the non-separable transform index is represented by bin string '11'.

**Patentansprüche**

1. Transformationsverfahren, das von einer Decodiervorrichtung durchgeführt wird, wobei das Verfahren Folgendes umfasst:

   Empfangen eines nicht trennbaren Transformationsindex;
   Erhalten (700) von Transformationskoeffizienten für einen Zielblock;
   Bestimmen (710) eines nicht trennbaren Transformationssatzes für den Zielblock;
   Auswählen (720) eines aus einer Vielzahl von nicht trennbaren Transformationskernen, die in dem nicht trennbaren Transformationssatz enthalten sind, basierend auf dem nicht trennbaren Transformationsindex; und
   Erzeugen (730) modifizierter Transformationskoeffizienten durch nicht trennbare Transformation der Transformationskoeffizienten basierend auf dem ausgewählten nicht trennbaren Transformationskern,
   wobei der nicht trennbare Transformationssatz für den Zielblock basierend auf mindestens einem von einem Intraprädiktionsmodus und einer Größe des Zielblocks bestimmt wird,
   wobei ein Wert des nicht trennbaren Transformationsindex basierend auf einer abgeschnittenen unären Binarisierung repräsentiert wird,
   **dadurch gekennzeichnet, dass**
   der nicht trennbare Transformationssatz ein gemischter nicht trennbarer Transformationssatz ist, der einen 4x4 nicht trennbaren Transformationskern und einen 8x8 nicht trennbaren Transformationskern umfasst.

2. Verfahren nach Anspruch 1, wobei ein Indexwert, der dem 8x8 nicht trennbaren Transformationskern zugewiesen ist, kleiner ist als ein Indexwert ist, der dem 4x4 nicht trennbaren Transformationskern zugewiesen ist.

3. Verfahren nach Anspruch 1, wobei, wenn die Größe des Zielblocks größer als eine vordefinierte Referenzgröße ist, ein dem 8x8 nicht trennbaren Transformationskern zugewiesener Indexwert kleiner als ein dem 4x4 nicht trennbaren Transformationskern zugewiesener Indexwert ist.

4. Verfahren nach Anspruch 1, wobei eine Anzahl der nicht trennbaren Transformationskerne, die in dem nicht trennbaren Transformationssatz enthalten sind, variabel ist.

5. Verfahren nach Anspruch 1, das ferner Folgendes umfasst:

   Erhalten von Informationen, die repräsentieren, ob der gemischte nicht trennbare Transformationssatz auf den Zielblock angewandt wird; und
   Bestimmen, ob ein gemischter nicht trennbarer Transformationssatz verwendet wird, basierend auf den Informationen.

6. Verfahren nach Anspruch 5, wobei:

   wenn ein Wert der gemischten Typinformation 0 ist, ein nicht gemischter nicht trennbarer Transformationssatz mit 8x8 nicht trennbaren Transformationskernen oder 4x4 nicht trennbaren Transformationskernen verwendet wird, und
   wenn ein Wert der gemischten Typinformation nicht 0 ist, ein gemischter nicht trennbarer Transformationssatz mit einem 4x4 nicht trennbaren Transformationskern und einem 8x8 nicht trennbaren Transformationskern verwendet wird.

7. Verfahren nach Anspruch 1, wobei der nicht trennbare Transformationssatz für den Zielblock basierend sowohl auf dem Intraprädiktionsmodus als auch der Größe des Zielblocks bestimmt wird.

8. Verfahren nach Anspruch 1, wobei der Wert des nicht trennbaren Transformationsindex mit variabler Länge binarisiert ist.

9. Verfahren nach Anspruch 1, wobei ein Maximalwert des nicht trennbaren Transformationsindex 2 ist, und wobei Wert 0 des nicht trennbaren Transformationsindex durch Bin-String '0' repräsentiert wird, Wert 1 des nicht trennbaren Transformationsindex durch Bin-String '10' repräsentiert wird, und Wert 2 des nicht trennbaren Transformationsindex durch Bin-String '11' repräsentiert wird.

10. Verfahren nach Anspruch 1, wobei:

ein Wert des nicht trennbaren Transformationsindex auf der Basis der kontextbasierten Decodierung erhalten wird, und

ein Kontextmodell für die kontextbasierte Decodierung des Wertes des nicht trennbaren Transformationsindex auf der Basis von mindestens einem von der Größe des Zielblocks, dem Intraprädiktionsmodus, einem Informationswert, der angibt, ob der gemischte nicht trennbare Transformationssatz auf den Zielblock angewandt wird, und einem maximalen Indexwert innerhalb des nicht trennbaren Transformationssatzes bestimmt wird.

**11.** Transformationsverfahren, durchgeführt von einer Codiervorrichtung, wobei das Verfahren Folgendes umfasst:

Erhalten (600) von Transformationskoeffizienten für einen Zielblock;
Bestimmen (610) eines nicht trennbaren Transformationssatzes für den Zielblock;
Auswählen (620) eines aus einer Vielzahl von nicht trennbaren Transformationskernen, die in dem nicht trennbaren Transformationssatz enthalten sind, wobei der ausgewählte nicht trennbare Transformationskern zum nicht trennbaren Transformieren der Transformationskoeffizienten für den Zielblock verwendet wird;
Erzeugen (630) eines nicht trennbaren Transformationsindex, der den ausgewählten nicht trennbaren Transformationskern aus dem nicht trennbaren Transformationssatz angibt; und
Codieren von Informationen über den nicht trennbaren Transformationsindex,
wobei der nicht trennbare Transformationssatz für den Zielblock basierend auf mindestens einem von einem Intraprädiktionsmodus und einer Größe des Zielblocks bestimmt wird,
wobei ein Wert des nicht trennbaren Transformationsindex basierend auf einer abgeschnittenen unären Binarisierung repräsentiert wird, und
**dadurch gekennzeichnet, dass**
der nicht trennbare Transformationssatz ein gemischter nicht trennbarer Transformationssatz ist, der einen 4x4 nicht trennbaren Transformationskern und einen 8x8 nicht trennbaren Transformationskern umfasst.

**12.** Verfahren nach Anspruch 11, wobei ein Maximalwert des nicht trennbaren Transformationsindex 2 ist, und wobei Wert 0 des nicht trennbaren Transformationsindex durch Bin-String '0' repräsentiert wird, Wert 1 des nicht trennbaren Transformationsindex durch Bin-String '10' repräsentiert wird, und Wert 2 des nicht trennbaren Transformationsindex durch Bin-String '11' repräsentiert wird.

**13.** Digitales Speichermedium, das Informationen speichert, die eine Decodiervorrichtung veranlassen, ein Transformationsverfahren durchzuführen, wobei das Verfahren Folgendes umfasst:

Erhalten (700) eines nicht trennbaren Transformationsindex;
Erhalten (710) von Transformationskoeffizienten für einen Zielblock;
Bestimmen (720) eines nicht trennbaren Transformationssatzes für den Zielblock;
Auswählen eines aus einer Vielzahl von nicht trennbaren Transformationskernen, die in dem nicht trennbaren Transformationssatz enthalten sind, basierend auf dem nicht trennbaren Transformationsindex; und
Erzeugen (730) modifizierter Transformationskoeffizienten durch nicht trennbare Transformation der Transformationskoeffizienten basierend auf dem ausgewählten nicht trennbaren Transformationskern,
wobei der nicht trennbare Transformationssatz für den Zielblock basierend auf mindestens einem von einem Intraprädiktionsmodus und einer Größe des Zielblocks bestimmt wird,
wobei ein Wert des nicht trennbaren Transformationsindex basierend auf einer abgeschnittenen unären Binarisierung repräsentiert wird, und
**dadurch gekennzeichnet, dass**
der nicht trennbare Transformationssatz ein gemischter nicht trennbarer Transformationssatz ist, der einen 4x4 nicht trennbaren Transformationskern und einen 8x8 nicht trennbaren Transformationskern umfasst.

**14.** Digitales Speichermedium nach Anspruch 13, wobei ein Maximalwert des nicht trennbaren Transformationsindex 2 ist, und
wobei Wert 0 des nicht trennbaren Transformationsindex durch Bin-String '0' repräsentiert wird, Wert 1 des nicht trennbaren Transformationsindex durch Bin-String '10' repräsentiert wird, und Wert 2 des nicht trennbaren Transformationsindex durch Bin-String '11' repräsentiert wird.

**Revendications**

**1.** Procédé de transformation exécuté par un appareil de décodage, le procédé consistant à :

recevoir un indice de transformation non séparable ;

obtenir (700) des coefficients de transformation pour un bloc cible ;

déterminer (710) un ensemble de transformations non séparables pour le bloc cible ;

sélectionner (720) l'un d'une pluralité de noyaux de transformation non séparable inclus dans l'ensemble de transformations non séparables sur la base de l'indice de transformation non séparable ; et

générer (730) des coefficients de transformation modifiés par une transformation non séparable des coefficients de transformation sur la base du noyau de transformation non séparable sélectionné,

dans lequel l'ensemble de transformations non séparables pour le bloc cible est déterminé sur la base d'au moins l'un d'un mode d'intra-prédiction et d'une taille du bloc cible,

dans lequel une valeur de l'indice de transformation non séparable est représentée sur la base d'une binarisation unaire tronquée,

**caractérisé en ce que** l'ensemble de transformations non séparables est un ensemble de transformations non séparables mixtes comprenant un noyau de transformation non séparable 4x4 et un noyau de transformation non séparable 8x8.

2. Procédé selon la revendication 1, dans lequel une valeur d'indice attribuée au noyau de transformation non séparable 8x8 est inférieure à une valeur d'indice attribuée au noyau de transformation non séparable 4x4.

3. Procédé selon la revendication 1, dans lequel, si la taille du bloc cible est supérieure à une taille de référence prédéfinie, une valeur d'indice attribuée au noyau de transformation non séparable 8x8 est inférieure à une valeur d'indice attribuée au noyau de transformation non séparable 4x4.

4. Procédé selon la revendication 1, dans lequel un nombre des noyaux de transformation non séparable inclus dans l'ensemble de transformations non séparables est variable.

5. Procédé selon la revendication 1, consistant en outre à :

obtenir des informations représentant si l'ensemble de transformations non séparables mixtes est appliqué au bloc cible ; et

déterminer si un ensemble de transformations non séparables mixtes est utilisé sur la base des informations.

6. Procédé selon la revendication 5, dans lequel :
si une valeur des informations de type mixte est 0, un ensemble de transformations non séparables mixtes comprenant des noyaux de transformation non séparable 8x8 ou des noyaux de transformation non séparable 4x4 est utilisé, et si une valeur des informations de type mixte n'est pas 0, un ensemble de transformations non séparables mixtes comprenant un noyau de transformation non séparable 4x4 et un noyau de transformation non séparable 8x8 est utilisé.

7. Procédé selon la revendication 1, dans lequel l'ensemble de transformations non séparables pour le bloc cible est déterminé sur la base à la fois du mode d'intra-prédiction et de la taille du bloc cible.

8. Procédé selon la revendication 1, dans lequel la valeur de l'indice de transformation non séparable est binarisée à longueur variable.

9. Procédé selon la revendication 1, dans lequel une valeur maximale de l'indice de transformation non séparable est 2, et
dans lequel la valeur 0 de l'indice de transformation non séparable est représentée par la chaîne de bits '0', la valeur 1 de l'indice de transformation non séparable est représentée par la chaîne de bits '10', et la valeur 2 de l'indice de transformation non séparable est représentée par la chaîne de bits '11'.

10. Procédé selon la revendication 1, dans lequel :
une valeur de l'indice de transformation non séparable est obtenue sur la base d'un décodage à base de contexte, et un modèle de contexte pour le décodage à base de contexte de la valeur de l'indice de transformation non séparable est déterminé sur la base d'au moins un élément parmi la taille du bloc cible, le mode d'intra-prédiction, une valeur d'information représentant si l'ensemble de transformations non séparables mixtes est appliqué au bloc cible et une valeur d'indice maximale dans l'ensemble de transformations non séparables.

11. Procédé de transformation exécuté par un appareil de codage, le procédé consistant à :

obtenir (600) des coefficients de transformation pour un bloc cible ;

déterminer (610) un ensemble de transformations non séparables pour le bloc cible ;

sélectionner (620) l'un d'une pluralité de noyaux de transformation non séparable inclus dans l'ensemble de transformations non séparables, dans lequel le noyau de transformation non séparable sélectionné est utilisé pour transformer de manière non séparable les coefficients de transformation pour le bloc cible ;

générer (630) un indice de transformation non séparable spécifiant le noyau de transformation non séparable sélectionné dans l'ensemble de transformations non séparables ; et

coder des informations sur l'indice de transformation non séparable,

dans lequel l'ensemble de transformations non séparables pour le bloc cible est déterminé sur la base d'au moins l'un d'un mode d'intra-prédiction et d'une taille du bloc cible,

dans lequel une valeur de l'indice de transformation non séparable est représentée sur la base d'une binarisation unaire tronquée, et

**caractérisé en ce que** l'ensemble de transformations non séparables est un ensemble de transformations non séparables mixtes comprenant un noyau de transformation non séparable 4x4 et un noyau de transformation non séparable 8x8.

12. Procédé selon la revendication 11, dans lequel une valeur maximale de l'indice de transformation non séparable est 2, et

dans lequel la valeur 0 de l'indice de transformation non séparable est représentée par la chaîne de bits '0', la valeur 1 de l'indice de transformation non séparable est représentée par la chaîne de bits '10', et la valeur 2 de l'indice de transformation non séparable est représentée par la chaîne de bits '11'.

13. Support de stockage numérique stockant des informations amenant un appareil de décodage à exécuter un procédé de transformation, le procédé consistant à :

obtenir (700) un indice de transformation non séparable ;

obtenir (710) des coefficients de transformation pour un bloc cible ;

déterminer (720) un ensemble de transformations non séparables pour le bloc cible ;

sélectionner l'un d'une pluralité de noyaux de transformation non séparable inclus dans l'ensemble de transformations non séparables sur la base de l'indice de transformation non séparable ; et

générer (730) des coefficients de transformation modifiés par une transformation non séparable des coefficients de transformation sur la base du noyau de transformation non séparable sélectionné,

dans lequel l'ensemble de transformations non séparables pour le bloc cible est déterminé sur la base d'au moins l'un d'un mode d'intra-prédiction et d'une taille du bloc cible,

dans lequel une valeur de la transformation non séparable est représentée par un indice basé sur une binarisation unaire tronquée, et

**caractérisé en ce que** l'ensemble de transformations non séparables est un ensemble de transformations non séparables mixtes comprenant un noyau de transformation non séparable 4x4 et un noyau de transformation non séparable 8x8.

14. Support de stockage numérique selon la revendication 13, dans lequel une valeur maximale de l'indice de transformation non séparable est 2, et

dans lequel la valeur 0 de l'indice de transformation non séparable est représentée par la chaîne de bits '0', la valeur 1 de l'indice de transformation non séparable est représentée par la chaîne de bits '10', et la valeur 2 de l'indice de transformation non séparable est représentée par la chaîne de bits '11'.

# FIG. 1

# FIG. 2

# FIG. 3

S310

Residual samples → Primary transform (adaptive multi-core transform) → Transform coefficients (1st) → Secondary transform (non-separable secondary transform) → Transform coefficients (2nd)

S320

Transformer

S350

Transform coefficients (2nd) → Secondary (inverse) transform (non-separable secondary transform) → Transform coefficients (1st) → Primary (inverse) transform (adaptive multi-core transform) → Residual samples

S360

Inverse transformer

EP 3 588 952 B1

# FIG. 4

# FIG. 5

Coefficients

Intra mode
Block Size

Inverse Q

S540

Select NSST SET
(Block size, Intra Mode)

S545

4x4
Type set

8x8
Type set

Mixed
Type 1

Mixed
Type 2

Mixed
Type 3

Coefficients'

S550

Secondary
Transform

Coefficients"

# FIG. 6

START

Obtain transform coefficients for target block
(based on primary transform of residual samples) — S600

Determine NSST set for target block — S610

Select one of plurality of NSST kernels
included in NSST set and set NSST index — S620

Generate modified transform coefficients by
non-separable-secondary-transforming transform
coefficients based on selected NSST kernel — S630

END

# FIG. 7

```
                    ( START )
                        │
                        ▼
┌────────────────────────────────────────┐
│   Obtain transform coefficients for      │
│          target block                    │
│      (based on dequantization of         │───  S700
│    quantized transform coefficients)     │
└────────────────────────────────────────┘
                        │
                        ▼
┌────────────────────────────────────────┐
│    Determine NSST set for target block   │───  S710
└────────────────────────────────────────┘
                        │
                        ▼
┌────────────────────────────────────────┐
│    Select one of plurality of NSST       │
│      kernels                             │───  S720
│  included in NSST set based on NSST index│
└────────────────────────────────────────┘
                        │
                        ▼
┌────────────────────────────────────────┐
│   Generate modified transform            │
│   coefficients by                        │
│ non-separable-secondary-transforming     │───  S730
│   transform                              │
│ coefficients based on selected NSST      │
│   kernel                                 │
└────────────────────────────────────────┘
                        │
                        ▼
                    ( END )
```

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithm Description of Joint Exploration Test Model 5. **CHEN J et al.** JVET MEETING. THE JOINT VIDEO EXPLORATION TEAM OF ISO/IEC JTC1/SC29/WG11 AND ITU-T SG.16, 12 January 2017, vol. 5

- **HYEONGMUN, J. et al.** *Adaptive NSST kernel Size Selection,* 13 January 2017